Europäisches Patentamt

European Patent Office

Office européen des brevets

(11) Veröffentlichungsnummer: **0 185 232**
**A2**

(12) **EUROPÄISCHE PATENTANMELDUNG**

(21) Anmeldenummer: **85115108.4**

(22) Anmeldetag: **28.11.85**

(51) Int. Cl.⁴: **F 16 P 3/00**

(30) Priorität: **21.12.84 DE 3446918**

(43) Veröffentlichungstag der Anmeldung:
**25.06.86 Patentblatt 86/26**

(84) Benannte Vertragsstaaten:
**CH FR GB IT LI SE**

(71) Anmelder: **Wacker-Werke GmbH & Co. KG**

**D-8077 Reichertshofen(DE)**

(72) Erfinder: **Paukert, Julius**
**Netzerstrasse 4**
**D-8000 München 50(DE)**

(74) Vertreter: **Hieke, Kurt**
**Stadlerstrasse 3**
**D-8013 Haar bei München(DE)**

(54) **Handgriff mit Totmannschaltungseffekt an Baustellengeräte.**

㊗ Es wird ein Handgriff mit Totmannschaltungseffekt für Deichseln von Baustellengeräten, vorgeschlagen, der sich durch erhöhten Bedienungskomfort, einfachere konstruktive Gestaltung und erschwerte Manipulierbarkeit gegenüber dem Stande der Technik auszeichnet. Kernstück des Handgriffs ist ein in einer Halterung 1 an der Deichsel in seiner Längsrichtung gegen Federkraft (9) verschiebbarer Griffteil 3, der mindestens an einem seiner Enden begrenzte Bewegungsfreiheit in radialer Richtung hat, und eine zwangsweise Schiebekopplung 12,13, die den Griffteil 3 bezüglich seiner Halterung 1 in der Längsrichtung verschiebt, wenn dieser gegenüber seiner Halterung 1 in radialer Richtung verlagert wird. Die Längsverschiebung des Griffteils 3 wird auf ein Schaltglied 16 für den Fahrantrieb übertragen.

Fig. 1

Croydon Printing Company Ltd.

Wacker-Werke GmbH & Co. KG
Reichertshofen

Mein Zeichen: W 301/EP

B e s c h r e i b u n g

Handgriff mit Totmannschaltungseffekt an
Baustellengeräten

Die Erfindung bezieht sich auf einen Handgriff gemäß dem
Oberbegriff des Patentanspruchs 1.

Handgriffe dieser Art erfüllen die Funktion, daß das Baustellengerät sofort stillgesetzt wird, wenn sie der Bedienungsmann aus irgendeinem Grunde, also auch unabsichtlich, losläßt, wodurch Unfälle mit Personen-und/oder Sachschaden
vermieden werden.

Die bekannten Handgriffe sind zweiteilig und bestehen aus
einem stabilen Lenkgriff und einem zweiten, ähnlich geformten leichteren Griff, der gegen Feder- oder Schwerkraft an den Lenkgriff herangezogen werden muß, damit der
Fahrantrieb in Gang gesetzt werden kann und in Tätigkeit
bleibt. Beim Loslassen der beiden Griffe kehrt der leichtere Griff unter der Schwerkraft, meistens aber durch eine
Feder, die gewöhnlich als Torsionsfeder ausgeführt ist,
in die Ruhestellung zurück und gibt eine vorher mit dem
Fahrbetätigungshebel gespannte Feder frei, die die Fahrkupplung trennt und eine Bremse betätigt, so daß die Walze
sofort zum Stillstand kommt. Griffe dieser Art werden
sowohl bei rein mechanisch als auch bei hydrostatisch an-

getriebenen Walzen eingesetzt.

Die bekannten Griffe sind konstruktiv aufwendig und bieten auch nicht eine ausreichende Sicherheit dafür, daß ihre Funktion z.B. durch Festbinden des leichteren Griffes an dem Lenkgriff ausgeschaltet werden kann. Diese Gefahr ist gegeben, weil das permanente Halten des leichteren Griffes gegen die Schwer- oder Federkraft für den Bedienungsmann mit einer gewissen Unbequemlichkeit verbunden ist, die in ihm, insbesondere beim längeren Arbeiten mit dem Baustellengerät , den Wunsch aufkommen lassen kann, sich ihrer zu entledigen.

Demgemäß besteht die der Erfindung zugrunde liegende Aufgabe darin, einen Handgriff gemäß dem Oberbegriff des Patentanspruchs 1 konstruktiv zu vereinfachen und ihn überdies so zu gestalten, daß er einerseits für den Bedienenden bequemer zu handhaben ist und andererseits nicht mit einfachen Mitteln außer Funktion gesetzt werden kann.

Die vorstehende Aufgabe wird durch die im Kennzeichnungsteil des Patentanspruchs 1 genannten Merkmale gelöst.

Der erfindungsgemäße Handgriff tritt allein dadurch bereits voll in Funktion, daß der Griffteil vom Bedienungsmann gefaßt und gegen die Federbelastung vom oberen Anschlag abgerückt wird. Hierzu reicht - mindestens weitgehend - bereits das Eigengewicht von Hand und Arm, so daß mit dieser Manipulation keine wesentliche Unbequemlichkeit verbunden ist.

Zum Lenken muß der Bedienungsmann immer wieder ziemlich große Kräfte in radialer Richtung auf den Griffteil ausüben, wobei nicht ausgeschlossen ist, daß diese Kräfte auch Komponenten in Richtung zum oberen Anschlag hin haben.

In diesem Falle kann aber der Griffteil aufgrund der eingebauten Schiebekopplung nicht nach oben ausweichen und so einen unbeabsichtigten Stillstand des Baustellengeräts auslösen.

Wegen der bequemen Handhabbarkeit besteht für den Bedienenden von vornherein kein Grund , zu versuchen, den Griffteil irgendwie gegen die Federkraft festzulegen. Andererseits ist es auch viel schwieriger, einen in seiner Längsrichtung verschiebbaren Griffteil gegen eine Federkraft festzulegen als zwei zusammendrückbare Handgriffe zusammenzubinden. Dies kann zudem gemäß Patentanspruch 2 noch dadurch erschwert werden, daß der Handgriff mit einer an der Halterung angebrachten, mit dem Griffteil balgartig verschiebbaren Manschette umgeben wird.

Gemäß Anspruch 3 kann die Schiebekopplung einfach aus einem von der Halterung in Achsrichtung des Griffteiles vorragenden Stift und einer diesem zugewendeten stirnseitigen kegeligen Mulde im Griffteil bestehen, die sich bei einem Griffteilende mit der begrenzten radialen Bewegungsfreiheit befinden.

In jedem Falle wird die Federkraft wirksam und führt den Griffteil zum oberen Anschlag zurück, wenn der Bedienungsmann den Griffteil aus irgendeinem Grunde losläßt, und diese Rückverlagerung des Griffteiles führt über die Kopplung mit der Betätigungsbewegung eines Schaltgliedes für den Fahrantrieb zum sofortigen Stillstand des Baustellengeräts.

Die Erfindung wird nachstehend anhand der Zeichnung an einem Ausführungsbeispiel noch näher erläutert.

In der Zeichnung zeigt:

-4-

Fig. 1   einen erfindungsgemäßen Handgriff in Ansicht von
         der Seite,

Fig. 2   den Handgriff nach Fig. 1 in Ansicht mit Blickrichtung in Fahrtrichtung des Baustellengeräts
         im von Hand einfach gerade nach unten verlagerten Zustand, und

Fig. 3   den Handgriff nach Fig. 1 und 2 in der Fig. 2
         entsprechender Darstellung im Betätigungszustand
         unter seitlich auf den Griffteil einwirkenden
         Lenkkräften.

Der in der Zeichnung dargestellte Handgriff weist eine
rahmenartige Halterung 1 auf, die starr an der nur in Fig.
1 angedeuteten Deichsel 2 des Baustellengeräts angebracht
ist. Die Halterung 1 hält oben und unten einen in der Gebrauchsstellung des Handgriffs im wesentlichen vertikalen
Griffteil 3 , der sich in Bohrungen 4 und 5 in Halterungsköpfen 6 bzw. 7 erstreckt, die sein oberes bzw. unteres
Ende mit Abstand umgeben. Beide Bohrungen lassen dem
Griffteil 3 viel Spiel in seitlicher Richtung, wobei
dieses Spiel bei der oberen Bohrung 4 noch größer ist als
bei der unteren. Der Griffteil 3 weist einen von seiner
unteren Stirnfläche senkrecht abstehenden , zentralen
Stift 16 auf, der aus dem unteren Halterungskopf 7 durch
eine Bohrung 8 hindurch herausragt. Der Stift ist von
einer Druckfeder 9 umgeben, die sich zwischen einer die
Bohrung 8 umgebenden Ringschulter 10 im Halterungskopf 7
und der unteren Stirnfläche 11 des Griffteiles 3 abstützt
und den Griffteil 3 vertikal nach oben zu verlagern trachtet. Vom oberen Halterungskopf 6 her ragt in Achsrichtung
des Griffteiles 3 zu diesem ein mit einem kugeligen Kopf
versehener Stift 12 vor, der in eine stirnseitige kegelige
Mulde 13 im Griffteil 3 eingreift. Dieser Stift 12 bildet einen oberen Anschlag für den Griffteil 3 und erfüllt in Verbindung mit der kegeligen Mulde 13 gleichzeitig die Funktion einer Schiebekopplung, die bewirkt, daß der Griffteil 3 gegen die Kraft der Feder 9 nach unten verlagert wird, wenn auf den Griffteil 3 Kräfte in radialer Richtung ausgeübt werden.

Die Verschiebbarkeit des Griffteiles 3 nach unten ist durch einen die Feder 9 umgebenden unteren Anschlag 14 im unteren Halterungskopf 7 begrenzt, und die zugelassene axiale Verschiebbarkeit des Griffteiles 3 ist so bemessen, daß der Stift 12 auch in der untersten Stellung des Griffteiles 3 nicht aus der kegeligen Mulde freikommen kann.

Der Griffteil 3 hat im unteren Halterungskopf 7 so viel Spiel, daß sein oberen Ende bis an die Innenwandung der Bohrung 4 im oberen Halterungskopf 6 heran Bewegungsfreiheit in radialer Richtung hat.

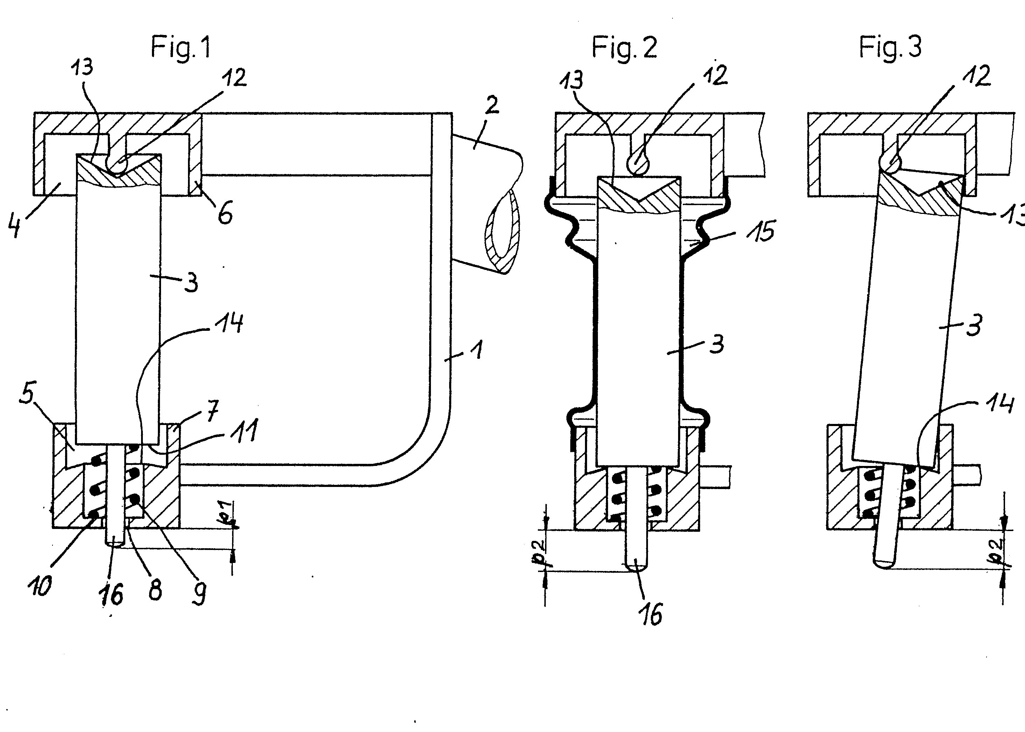

Gemäß Fig. 2 ist der Griffteil 3 von einer an den Halterungsköpfen 6 und 7 befestigten , mit ihm balgartig verschiebbbaren Manschette 15 umgeben.

Die Fig. 2 zeigt den Griffteil 1 (ohne Darstellung der Hand des Bedienenden) in der einfach gerade nach unten gedrückten Position. In dieser Position ragt der Stift 16 um eine Strecke p2 aus dem unteren Halterungskopf 7 hervor, die wesentlich größer ist, als die Strecke p1 , um die er aus dem Halterungskopf 7 hervorsteht, wenn er sich

6

0185232

oben an dem Stift 12 in Anlage befindet. Die Differenz zwischen den Strecken pl und p2 ergibt einen Schaltweg, der über ein nicht dargestelltes koppelndes Schaltgestänge zu einem Betätigungselement für den Fahrantrieb des Baustellengeräts übertragen wird.

Der gleiche Schaltweg ergibt sich in etwa zwangsweise, wenn gemäß Fig. 3 auf den Griffteil 3 in radialer Richtung eine Kraft ausgeübt wird. Hierbei gleitet die kegelige Fläche der Mulde 13 entlang des Kugelkopfes des Stiftes 12 und wird dabei kraftschlüssig nach unten in Richtung zum Anschlag 14 hin mit dem Griffteil 3 verlagert.

Die verhältnismäßig großen Kräfte, die beim Lenken des Baustelengeräts auftreten, werden durch die Bohrungen 4 und 5 in den Halterungsköpfen 6 bzw. 7 aufgenommen.

Der Schaltweg des Stiftes 16 könnte auch zur direkten Betätigung eines Elektroschalters, Hydraulik-Wegeventils oder dgl. herangezogen werden, die in einen Steuerkreis für den Fahrantrieb eingebaut sind.

-7-

Haar, den 26. 11.0185232

Wacker-Werke GmbH & Co. KG
Reichertshofen

Mein Zeichen: W 301/EP

P a t e n t a n s p r ü c h e

1. Handgriff mit Totmannschaltungseffekt für die Deichsel von selbstfahrenden, deichselgelenkten Baustellengeräten, insbesondere Deichselwalzen, d a d u r c h gekennzeichnet, daß der Griffteil (3) des Handgriffs aufrecht stehend in einer an der Deichsel (2) des Baustellengeräts anzubringenden Halterung (1) zwischen Anschlägen (12,14) in seiner Längsrichtung verschieblich gehalten und zu dem oberen Anschlag (12) federbelastet (9) ist und mindestens an einem seiner Enden begrenzte Bewegungsfreiheit in radialer Richtung hat, daß eine zwangsweise Schiebekopplung (12, 13) zwischen dem Griffteil (3) und seiner Halterung (1) vorgesehen ist, die den Griffteil (3) bezüglich seiner Halterung (1) in seiner Längsrichtung gegen die Federkraft verschiebt, wenn dieser gegenüber seiner Halterung (1) in radialer Richtung verlagert wird, und daß mit der Längsverschiebung des Griffteils (3) die Betätigungsbewegung eines Schaltgliedes (16) für den Fahrantrieb gekoppelt ist.

2. Handgriff nach Anspruch 1, gekennzeichnet durch einen an der Halterung (1) angebrachte, den Griffteil (3) umgebende und balgartig mit diesem verschiebbare Manschette 15.

3. Handgriff nach Anspruch 1 oder 2, d a d u r c h gekennzeichnet, daß die Schiebekopplung aus einem von

der Halterung (1) in Achsrichtung des Griffteiles (3) vorragenden Stifts (12) und einer diesem zugewendeten, stirnseitigen kegeligen Mulde (13) im Griffteil (3) besteht, die sich bei einem Griffteilende mit der begrenzten radialen Bewegungsfreiheit befinden.

Fig. 1

Fig. 2

Fig. 3

1/1

0185232